**Europäisches Patentamt**

**European Patent Office**

**Office européen des brevets**

(11) Veröffentlichungsnummer: **0 014 769**

**A1**

(12) # EUROPÄISCHE PATENTANMELDUNG

(21) Anmeldenummer: **79105362.2**

(22) Anmeldetag: **24.12.79**

(51) Int. Cl.³: **B 65 G 53/66**
**B 01 J 4/00**

(30) Priorität: **26.01.79 DE 2902911**

(43) Veröffentlichungstag der Anmeldung:
**03.09.80 Patentblatt 80/18**

(84) Benannte Vertragsstaaten:
**BE CH FR GB IT SE**

(71) Anmelder: **Fried. Krupp Gesellschaft mit beschränkter Haftung**
**Altendorfer Strasse 103**
**D-4300 Essen 1(DE)**

(72) Erfinder: **Adolfs, Friedhelm**
**Oberbilker Allee 304**
**D-4000 Düsseldorf 1(DE)**

(72) Erfinder: **Arbeletche, Carlos**
**Dalmerweg 86**
**D-4720 Beckum(DE)**

(72) Erfinder: **Klein, Hans, Dr.**
**Prudentiastrasse 5**
**D-4720 Beckum(DE)**

(72) Erfinder: **Klein, Peter, Dr.**
**Rheinstrasse 51**
**D-4300 Essen 18(DE)**

(72) Erfinder: **Radke, Dietrich, Dr.**
**An der Hoffnung 16**
**D-4030 Ratingen 5 Breitscheid(DE)**

(54) **Verfahren und Vorrichtung zur pneumatisch in Abhängigkeit der abgeführten Fördergutmenge steuerbaren Beschickung eines Reaktors.**

(57) Bei Verfahren und Vorrichtungen zur pneumatisch in Abhängigkeit der abgeführten Fördergutmenge steuerbaren Beschickung eines Reaktors, in dessen Druckgefäß ein über einen Druckzuteiler einstellbarer Überdruck, der sogenannte Oberdruck herrscht, wird eine Beschickung jeder Beschickungsstelle mit Fördergut in der gewünschten Dosiermenge angestrebt.

Um den gesamten Prozeßablauf kontrollieren und Störungen vermeiden zu können, wird das Fördergut an mehreren Ausläufen (2a, 2b, 2c) in mehrere, dort angeschlossene Förderrohre (4a, 4b, 4c) abgeführt, wobei in jedem Förderrohr den Förderstrom kennzeichnende Größen gemessen und diese Meßwerte, ggf. nach entsprechender Aufbereitung, zur Steuerung bzw. Regelung des Oberdruckes und der Druckdifferenz des Oberdruckes zu dem in den Förderrohren (4a, 4b, 4c) herrschenden Druck verwendet werden.

Zur Messung des Druckes, der Transportgeschwindigkeit, der Dichte und der Temperatur des Fördergutes verwendet man Meßsonden (5a, 5b, 5c), die mit entsprechenden Einrichtungen (3a, 3b, 3c, 6a, 6b, 6c, 7a, 7b, 7c, 8a, 8b, 8c, 9, 10a, 10b, 11, 15, 16a, 16b, 16c, 17) zur Regulierung und Stabilisierung des Druckes, der Fördergut- und der Fördergas-Menge verbunden sind.

Croydon Printing Company Ltd

0014769

FRIED. KRUPP GESELLSCHAFT MIT BESCHRÄNKTER HAFTUNG
in Essen


Verfahren und Vorrichtung zur pneumatisch in Abhängigkeit der abgeführten Fördergutmenge steuerbaren Beschickung eines Reaktors


Die Erfindung betrifft ein Verfahren zur pneumatisch in Abhängigkeit der abgeführten Fördergutmenge steuerbaren Beschickung eines Reaktors, in dessen Druckgefäß ein über einen Druckzuteiler einstellbarer Überdruck, der sog. Oberdruck, herrscht. Insbesondere eignet sich dieses Verfahren zur Beschickung von Reaktionsgefäßen mit feinkörnigen Stoffen.

Nach dem Stand der Technik wird feinkörniges Material mit Hilfe von pneumatischen Schneckenpumpen oder pneumatischen Senkrechtförderern gefördert. Es sind ferner Druckgefäße bekannt, aus denen feinkörniges Material nach erfolgter Auflockerung mit Hilfe von speziellen Dosiereinrichtungen, wie z.B. Schnecken, Zellradschleusen oder pneumatisch arbeitenden Einschnürdüsen, in Reaktionsgefäße dosiert eingeblasen werden kann.

Bei dem letztgenannten Verfahren ist es notwendig, für jede Verbraucherstelle eine eigene Dosiereinrichtung zu installieren. Diese ist immer dann aufwendig, wenn ein mit feinkörnigen Stoffen zu beschickender Reaktor mehrere Verbraucherstellen bedienen muß. Abhilfe schaffte ein Verfahren, bei dem ein Förderstrom aus einem Behälter über ein Kammersystem auf die verschiedenen Verbraucherstellen eines Reaktors aufgegeben wird. Diese Anordnung ist aber mit dem Nachteil verbunden, daß eine gezielte, kontrollierte Beschickung

79/7 Europa
Vo/Kn

der einzelnen Verbraucherstellen praktisch nicht
möglich ist. Infolge unterschiedlicher Förderbedingungen an den einzelnen Beschickungsstellen treten
oft Störungen im gleichmäßigen Prozeßablauf ein. In
besonderen Fällen, in denen der Förderstrom gleichzeitig eine Schutzfunktion für die Beschickungsstelle
in dem Reaktor hat, kann es sogar zu einer Zerstörung
der Zuführungsstelle kommen. Dies tritt insbesondere
bei Hochtemperaturprozessen häufig ein.

Es ist Aufgabe der vorliegenden Erfindung, die Nachteile der bisher bekannten Einrichtungen zu vermeiden und ein Verfahren und eine Vorrichtung anzugeben,
die eine Beschickung jeder Beschickungsstelle mit
Fördergut, insbesondere feinkörnigem Material, in
der gewünschten Dosiermenge ermöglicht. Darüber hinaus
soll der gesamte Prozeßablauf kontrollierbar sein,
damit bei Störungen der Förderung in den einzelnen
Fördersträngen geeignete Maßnahmen getroffen werden
können. Insbesondere ist beabsichtigt, eine Zerstörung
der Beschickungsstelle zu vermeiden, wobei diese
Sicherungsmaßnahme zugleich zur Vergleichmäßigung des
Förderstromes im Störungsfall dient.

Die Aufgabe wird durch Anwendung des im Patentanspruch 1 beschriebenen Verfahrens gelöst. Vorteilhafterweise benutzt man dabei die in den Ansprüchen
2 bis 6 beschriebenen Verfahrensschritte und arbeitet, in einer weiteren Ausgestaltung der Erfindung,
mit der in den Ansprüchen 7 bis 15 beschriebenen Vorrichtung. Als Transportgase verwendet man insbesondere
die Gase, die auf das zu fördernde Material abgestimmt
sind.

0014769

Das durch die Erfindung gekennzeichnete Verfahren sowie die erfindungsgemäße Vorrichtung besitzen gegenüber den bisher bekannten Verfahren und Vorrichtungen den Vorteil, daß die Förderung feinkörnigen Materials aus einem Druckgefäß kontrolliert zu mehreren Verbrauchsstellen durchgeführt werden kann, wobei jede dieser Verbrauchsstellen aus dem gleichen Druckgefäß beschickt wird. Die verwendete Druckregelung und -stabilisierung ermöglicht die Verwendung eines zentralen Steuerpultes, von dem aus alle sich infolge unterschiedlicher Förderbedingungen einstellenden Zustände erfaßt und im Störungsfall steuernde bzw. regelnde Maßnahmen ergriffen werden können. Ist in der erfindungsgemäßen Vorrichtung in dem Steuerpult ein Rechner untergebracht, so kann das beschriebene Verfahren vollständig automatisiert werden. Für jede der vorhandenen Beschickungsstellen kann eine gewünschte Dosiermenge eingestellt werden, ohne daß eine Störung im gleichmäßigen Prozeßablauf zu befürchten ist.

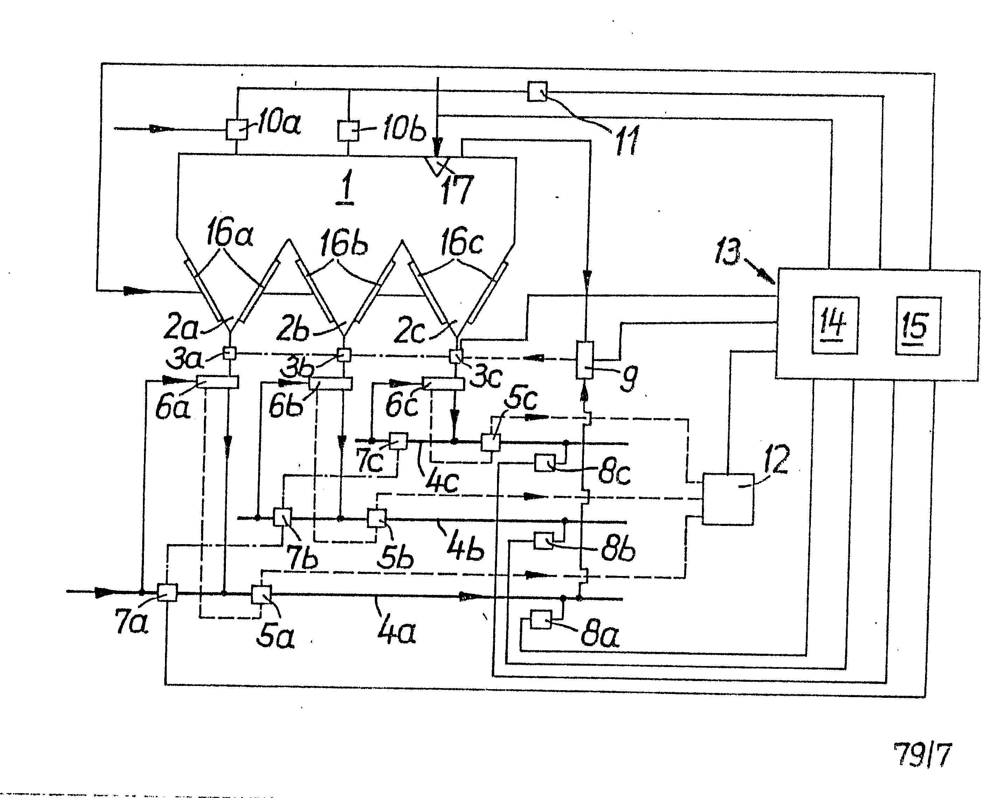

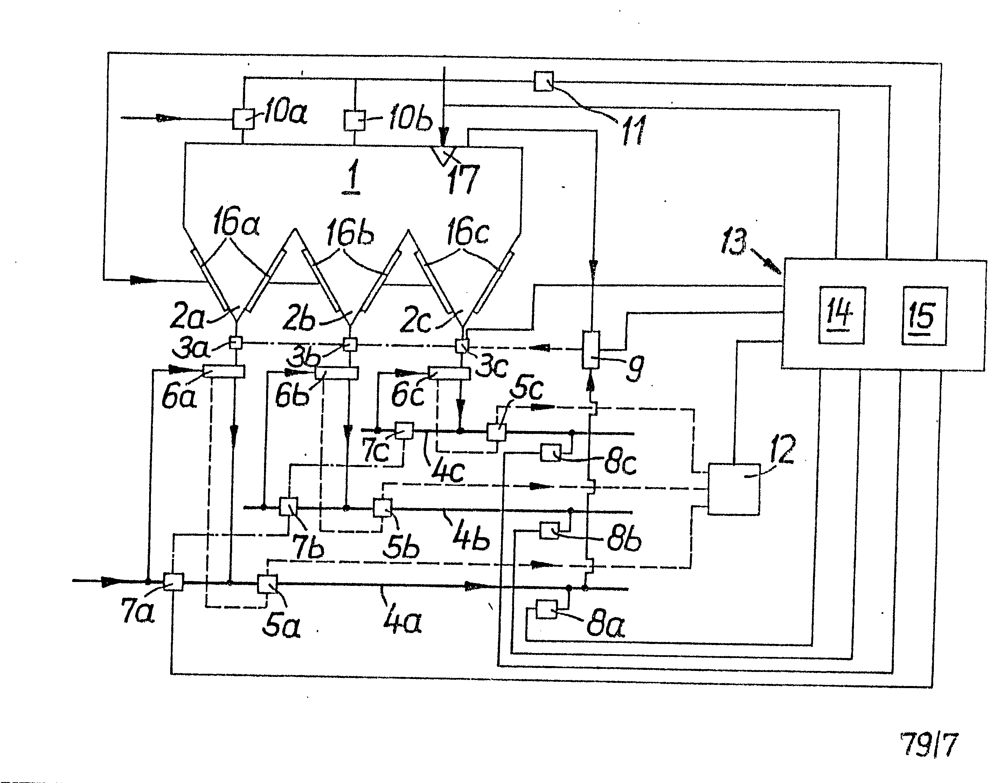

Das erfindungsgemäße Verfahren wird anhand der Zeichnung nachfolgend erläutert, die ein Ausführungsbeispiel einer Vorrichtung zur pneumatisch in Abhängigkeit der abgeführten Fördergutmenge steuerbaren Beschickung eines Reaktors zeigt.

Die Vorrichtung besteht im wesentlichen aus einem Druckgefäß 1 mit einem Materialeinlaßventil 17, welches im Bereich der Ausläufe 2a, 2b, 2c trichterförmig ausgebildet ist. Jeder der Ausläufe 2a, 2b, 2c besitzt eine pneumatische Einschnürdüse als veränderbares Auslaßventil 3a, 3b, 3c. An die Ausläufe 2a, 2b, 2c angeschlossen sind Förderrohre 4a, 4b und 4c, die jeweils eine Meßsonde 5a, 5b und 5c enthalten.

- 4 -

Weiterhin besitzt jedes der Förderrohre 4a, 4b, 4c 0014769 einen pneumatischen Fördergutstromregler 6a, 6b bzw. 6c und eine Transportgasmengenregelung 7a, 7b und 7c. Zur Stabilisierung des Druckes ist je eine Einrichtung 8a, 8b und 8c vorgesehen. Die Überwachung und Steuerung der Druckdifferenz des Überdrucks (Oberdrucks) im Druckgefäß 1 und des in den Förderrohren 4a, 4b, 4c herrschenden Druckes übernimmt ein Drucküberwacher 9. Das Druckgefäß 1 besitzt ferner im Querschnitt veränderbare Ventile 10a und 10b, die jeweils mit einer Überdruckregelung 11 verbunden sind. Den Meßsonden 5a, 5b und 5c ist ein Komparator 12 nachgeschaltet, der mit einem Steuerpult 13 verbunden ist. Das Steuerpult 13 enthält einen Rechner 14 sowie eine Vorrichtung 15 zur Einstellung der Sollwerte des Fördergutstromes. Das Steuerpult ist ferner verbunden mit Ein- und Auslassventilen 10a, 10b bzw. 3a, 3b, 3c und 17, mit den pneumatischen Fördergutstromreglern 6a, 6b, 6c, der Transportgasmengenregelung 7a, 7b, 7c, der Druckstabilisierung 8a, 8b, 8c sowie dem Drucküberwacher 9, der Oberdruckregelung 11 und Einrichtungen 16a, 16b und 16c zur Auflockerung des Fördergutes.

Das erfindungsgemäße Verfahren läuft folgendermaßen ab. Jede Meßsonde 5a, 5b und 5c mißt den Durchfluß durch das entsprechende Förderrohr 4a, 4b oder 4c, dem sie zugeordnet ist und gibt einen den Fördergutstrom analogen elektrischen Wert an einen Komparator 12, der bei an der Vorrichtung 15 eingestellten Sollwertabweichung den Fördergutstrom durch entsprechende Steuerung des pneumatischen Fördergutstromreglers 6a, 6b bzw. 6c entsprechend verändert. Der Komparator 12 gibt gleichzeitig die Meßsignale, die in den einzelnen Förderrohren 4a, 4b und 4c gewonnen worden sind, an den Rechner 14 des Steuerpultes 13 weiter, der, bei zu geringer oder zu großer Gesamt-

014769

förderung, den Oberdruck im Druckgefäß 1 erhöht bzw. absenkt. Vom Steuerpult 13 werden ebenfalls die Einrichtungen zur Druckstabilisierung 8a, 8b und 8c gesteuert und auf einem vorgebbaren konstanten Wert gehalten. Dieser Wert ist eine Funktion des Solldurchflusses durch das entsprechende Förderrohr und wird bei dem jeweiligen Förderrohr 4a, 4b oder 4c so eingestellt, daß evtl. durch unterschiedliche Prozesse in den einzelnen Förderrohren, die beispielsweise durch die verschiedene Zahl und Ausführung von Krümmern hervorgerufen werden können, die Druckdifferenz zum Überdruck im Förderrohr mittels des Drucküberwachers 9 eingestellt wird. Auf diese Weise wird in jedem der Förderrohre der gewünschte Feststoff-Durchfluß reguliert. Während die Fördergutstromregler 6a, 6b und 6c am jeweiligen Auslauf des Druckgefäßes 1 die Feststofffördermenge konstant halten, bewirken die Druckstabilisierungen 8a, 8b, 8c ein Konstanthalten des im Förderrohr 4a, 4b oder 4c eingestellten Druckes.

14769

Patentansprüche

1. Verfahren zur pneumatisch in Abhängigkeit der abgeführten Fördergutmenge steuerbaren Beschickung eines Reaktors, in dessen Druckgefäß ein über einen Druckzuteiler einstellbarer Überdruck, der sog. Oberdruck, herrscht, dadurch gekennzeichnet, daß das Fördergut an mehreren Ausläufen (2a, 2b, 2c) in mehrere dort angeschlossene Förderrohre (4a, 4b, 4c) abgeführt wird, wobei in jedem Förderrohr den Fördergutstrom kennzeichnende Größen gemessen und diese Meßwerte, bei Bedarf nach entsprechender Aufbereitung, zur Steuerung bzw. Regelung des Oberdruckes und der Druckdifferenz des Oberdruckes zu dem in den Förderrohren herrschenden Druck verwendet werden.

2. Verfahren nach Anspruch 1, dadurch gekennzeichnet, daß das Fördergut mittels Luft, Sauerstoff, Stickstoff oder Edelgas, wie z. B. Argon, als Transportgas abgeführt wird.

3. Verfahren nach Ansprüchen 1 bis 2, gekennzeichnet durch die Messung des Druckes, der Transportgeschwindigkeit, der Dichte und der Temperatur des Fördergutes.

4. Verfahren nach Ansprüchen 1 bis 3, dadurch gekennzeichnet, daß die gewonnenen Meßwerte mit fest oder variierbar vorgegebenen Soll-Werten verglichen werden und bei Abweichung voneinander eine entsprechende Änderung der Beschickung des Fördergutes, des Oberdruckes im Druckgefäß (1), bei einem, mehreren oder allen Auslassventilen (3a, 3b, 3c, 17) der Transportgasmenge und/oder der Transportgasgeschwindigkeit durchgeführt werden.

^014769

5. Verfahren nach Ansprüchen 1 bis 4, dadurch gekennzeichnet, daß der Oberdruck im Druckgefäß (1) und die Druckdifferenz des Oberdruckes zu dem in den Förderrohren (4a, 4b, 4c) herrschenden Druck konstant gehalten werden.

6. Verfahren nach Ansprüchen 1 bis 5, dadurch gekennzeichnet, daß das Fördergut, bevor es das Druckgefäß durch Auslassventile (3a, 3b, 3c) verläßt, aufgelockert wird.

7. Vorrichtung zur Durchführung des Verfahrens nach Ansprüchen 1 bis 6, gekennzeichnet durch ein mit Fördergut beschickbares Druckgefäß (1) mit mehreren Ausläufen (2a, 2b, 2c) an die zu jeweiligen Verbrauchsstellen führende Förderrohre angeschlossen sind, die jeweils eine oder mehrere Meßsonden (5a, 5b, 5c) enthalten, die wiederum mit einer den Druck, die Fördergutmenge und die Fördergasmenge in jedem der Förderrohre regulierenden und stabilisierenden Einrichtung verbunden sind.

8. Vorrichtung nach Anspruch 7, dadurch gekennzeichnet, daß für das Druckgefäß eine Einrichtung zur Oberdruckregelung durch Einlassventile (10a, 10b) mit veränderbarem Querschnitt vorgesehen ist.

9. Vorrichtung nach Anspruch 7, gekennzeichnet durch ein Druckgefäß, das im Bereich eines jeden Auslaufs (2a, 2b, 2c) trichterförmig ausgebildet ist.

10. Vorrichtung nach Ansprüchen 7 und 9, gekennzeichnet durch Einrichtungen zur Auflockerung des Fördergutes (16a, 16b, 16c), die sich im Bereich der trichterförmigen Druckgefäßausbildungen befinden.

11. Vorrichtung nach Ansprüchen 7 bis 10, dadurch gekennzeichnet, daß jeder Auslauf einer Auslassregeleinrichtung (3a, 3b, 3c), wie z. B. eine nach dem Stand der Technik bekannte pneumatische Einschnürdüse besitzt.

12. Vorrichtung nach Ansprüchen 7 bis 11, dadurch gekennzeichnet, daß in jedem der Förderrohre (4a, 4b, 4c) zur Druckregulierung miteinander in Verbindung stehende pneumatische Fördergutstromregler (6a, 6b, 6c) und Transportgasmengenregler (7a, 7b, 7c) vorhanden sind.

13. Vorrichtung nach Ansprüchen 7 bis 12, dadurch gekennzeichnet, daß jede der Meßsonden (5a, 5b, 5c) mit einem Soll/Ist-Wert-Komparator (12) verbunden ist, dem ein Rechner (14) nachgeschaltet ist.

14. Vorrichtung nach Ansprüchen 7 bis 13, dadurch gekennzeichnet, daß jedes Förderrohr (4a, 4b, 4c) eine Druckstabilisierungseinrichtung (8a, 8b, 8c, 11) sowohl für den absoluten Druck als auch für die Druckdifferenz zwischen dem Oberdruck im Druckgefäß und dem Druck in den Förderrohren enthält.

15. Vorrichtung nach Ansprüchen 7 bis 14, dadurch gekennzeichnet, daß die Ein- (10a, 10b) und Auslassventile (3a, 3b, 3c) die Meßsonden (5a, 5b, 5c) der pneumatische Fördergutstromregler (6a, 6b, 6c) der Transportgasmengenregler (7a, 7b, 7c), der Komparator (12), der Druckregler (11) und die Druckstabilisierungseinrichtung (8a, 8b, 8c) mit einem zentralen Steuerpult (13), in dem ggf. ein Rechner (14) untergebracht ist, verbunden sind.

Europäisches
Patentamt

EUROPÄISCHER RECHERCHENBERICHT

Nummer der Anmeldung

..14769

EP 79 10 5362

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 1 021 645 (COMP. DES ATELIERS ET FORGES DE LA LOIRE) <br> ✻ Seite 1, Zeilen 38-56; Seite 1, Zeile 69 bis Seite 4, Zeile 81; Abbildungen 6,7,9,11 ✻ <br> -- | 1,2,4, 5,7- 9,11, 12 |
| A | US - A - 4 082 513 (N.A. ANDON et al.) | 1,2 |
| A | US - A - 4 018 671 (N.A. ANDON et al.) | 1,2 |
| A | DE - A - 1 788 072 (FIBER CONTROLS) | |
| A | DE - C - 711 363 (J. GRUNBERG) <br> ---- | |

**KLASSIFIKATION DER ANMELDUNG (Int.Cl.³)**

B 65 G 53/66
B 01 J 4/00

**RECHERCHIERTE SACHGEBIETE (Int. Cl.³)**

B 01 J 3/02
4/00
8/00
B 65 G 53/66
G 05 D 11/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 08-05-1980 | SIEM |

EPA form 1503.1 06.78